# EUROPEAN PATENT APPLICATION

(11) **EP 1 385 119 A2**
(43) Date of publication of application: **28.01.2004**
(21) Application number: 03012820.1
(22) Date of filing: 05.06.2003
(51) Int. Cl.: G06K 15/12

(54) **Image processing apparatus, and image processing program storage medium**

(30) Priority: 24.07.2002 JP 2002214622
(71) Applicant: Fuji Photo Film Co. Ltd., Kanagawa 250-0193 (JP)
(72) Inventor: Watanabe, Akira, Fuji Photo Film Co.,Ltd., Ashigarakami-gun, Kanagawa 258-8538 (JP); Toyofuku, Takashi, Fuji Photo Film Co.,Ltd., Ashigarakami-gun, Kanagawa 258-8538 (JP)
(74) Representative: Klunker . Schmitt-Nilson . Hirsch

(57) **Abstract**

An image processing apparatus creates printing data in which sizes of images on the front and the back of a perfecting print are sufficiently coincident with one another. A printing mode obtaining section obtains discrimination between a single-sided print and a perfecting print. A correcting storage section stores an association between sort and size of a printing paper and correcting amount of a size of an image to be printed on at least one side of the printing paper. A blank form information obtaining section obtains sort and size of a printing paper to be used for printing. An image size correcting section corrects a size of an image to be printed on the front of the printing paper on the page description data. A rasterizing section converts the page description data into raster image data for printing.

## Description

### BACKGROUND OF THE INVENTION

### Field of the Invention

The present invention relates to an image processing apparatus for converting original image data into printing data, and an image processing program storage medium storing an image processing program which causes an information processing apparatus to operate as such an image processing apparatus when the image processing program is loaded onto the information processing apparatus.

### Description of the Related Art

Hitherto, in a field of the printing, there is widely used a DTP (DeskTop Publishing) system in which a personal computer and the like is used to perform an editing work for documents and printing. In the DTP system, an editing software (a DTP application) is used on an editing workstation to perform an editing work for determining a layout for a pattern representative of an image, a text, and a line drawing using a PDL (Page Description Language). And a result of the editing work is outputted in form of PS (PostScript) data and PDF (Portable Document Format) data. The outputted PS data and PDF data are fed to an image processing apparatus for converting those data into raster image data for printing. The image processing apparatus outputs the raster image data for printing to a printer. The printer prints an image (a halftone dot image) represented by the raster image data on a designated printing paper.

According to the image processing apparatus as mentioned above, when perfecting print is carried out, there is performed an offset adjustment for correcting misregistration of images in two sides of a printing paper in order to reduce discrepancy between a writing position (offset) of an image to be printed on the front of the printing paper and a writing position of an image to be printed on the back of the printing paper.

In a printer adopting an electrophotographic system and a sublimation heat transfer system, when an image is printed, a printing paper is heated and pressed. In the performance of the perfecting print by such a printer, it happens that the printing paper is deformed owing to a physical factor such as heat and pressure at the time when the front of the printing paper is printed, and the back is printed in a state that the printing paper is subjected to the deformation. For this reason, in the event that the same size of images are printed on the front and the back of the printing paper, the images printed on the front and the back of the printing paper are different from one another in size. It is difficult to correct the discrepancy of the images on the front and the back of the printing paper by the offset adjustment. This particularly involves a problem on a small size of printed matter, for example, a page applied with a boundary line and a visiting card.

### SUMMARY OF THE INVENTION

In view of the foregoing, it is an object of the present invention to provide an image processing apparatus capable of creating printing data, in which sizes of images of the front and the back of a printing paper are completely coincident with one another in perfecting print and an image processing program storage medium storing an image processing program which causes an information processing apparatus to operate as such an image processing apparatus when the image processing program is loaded onto the information processing apparatus.

To achieve the above-mentioned object, the present invention provides an image processing apparatus comprising:
a data conversion section that converts original image data into printing data; and
an image size correcting section that corrects a size of an image to be printed on at least one side of first and second sides of a printing paper on the original image data before conversion by the data conversion section or the printing data after conversion by the data conversion section so that sizes of images on both sides of the printing paper, wherein same images are printed on both sides of the printing paper, are substantially the same.

Here, the original image data referred to in the present invention denotes image data such as page description data, continuous tone data, text data, and graphic data. The printing data denotes such a type of data that a printer can output. For example, in case of a printer associated with raster image data, the raster image data is the printing data.

In a printer adopting an electrophotographic system and a sublimation heat transfer system, when an image is printed, a printing paper is heated and pressed. In the performance of the perfecting print by such a printer, it happens that the printing paper is deformed owing to a physical factor such as heat and pressure at the time when the front of the printing paper is printed, and the back is printed in a state that the printing paper is subjected to the deformation. Thus, it is difficult to print the same size of images on the front and the back of the printing paper. In view of the foregoing, it is considered that the printing data to be fed to the printer is corrected by the corresponding deformation. However, when it is intended that a size of an image is corrected in accordance with the raster image data, that is, the printing data, an interpolation arithmetic operation is needed. This involves an interpolation error. Accordingly, there occurs a problem that an image quality is deteriorated. Correction of the page description data takes less processing time as compared with that of the large raster image data. Thus, the correction of the page description data is better than that of the raster image data.

According to the image processing apparatus of the present invention, in the event that a perfecting print is designated, a size of an image to be printed on at least one side of first and second sides of a printing paper is corrected on the original image data or the printing data. For this reason, in the event that perfecting print is carried out by a printer adopting an electrophotographic system and a sublimation heat transfer system, even if the printing paper is deformed at the time when the front of the printing paper is printed, the back of the printing paper is corrected by the corresponding deformation on the on the original image data or the printing data. Accordingly, in the perfecting print, it is possible to create printing data in which sizes of images on the front and back of a printing paper are sufficiently coincident with one another. Incidentally, correction on the page description data as the original data makes it possible to reduce the processing time as compared with correction on the raster image data as the printing data, since it is sufficient that description data for correction is simply added onto the page description data.

In the image processing apparatus according to the present invention as mentioned above, it is preferable that the image processing apparatus further comprises:
a correcting storage section that stores an association between sort and size of a printing paper and correcting amount of a size of an image to be printed on at least one side of the printing paper; and
a blank form information obtaining section that obtains sort and size of a printing paper to be used for printing, and
wherein the image size correcting section corrects a size of an image to be printed on at least one side of first and second sides of a printing paper on the original image data or the printing data after conversion by the data conversion section, by a correcting amount according to the sort and size of the printing paper obtained by the blank form information obtaining section.

Further in the image processing apparatus according to the present invention as mentioned above, it is preferable that the image processing apparatus further comprises a printing mode obtaining section that obtains a discrimination between a single-sided print and a perfecting print, and
the image size correcting section corrects a size of an image to be printed on at least one side of first and second sides of a printing paper when the printing mode obtaining section designates the perfecting print.

This feature makes it possible for various types of printing papers, which are mutually different in sort and size, to create printing data in which sizes of images on the front and back of the respective printing paper are sufficiently coincident with one another.

Further, to achieve the above-mentioned object of the invention, the present invention provides an image processing program storage medium storing an image processing program which causes an information processing apparatus to operate as an image processing apparatus, when the image processing program is incorporated into the information processing apparatus and is executed, the image processing apparatus comprising:
a data conversion section that converts original image data into printing data; and
an image size correcting section that corrects a size of an image to be printed on at least one side of first and second sides of a printing paper on the original image data before conversion by the data conversion section or the printing data after conversion by the data conversion section so that sizes of images on both sides of the printing paper, wherein same images are printed on both sides of the printing paper, are substantially the same.

An image processing program stored in an image processing program storage medium of the present invention causes an information processing apparatus to operate as an image processing apparatus, when the image processing program is incorporated into the information processing apparatus and is executed. Thus, in the event that perfecting print is carried out by a printer adopting an electrophotographic system and a sublimation heat transfer system, it is possible to create printing data in which sizes of images on the front and back of a printing paper are sufficiently coincident with one another.

In the image processing program storage medium according to the present invention as mentioned above, it is preferable that the image processing apparatus further comprises:
a correcting storage section that stores an association between sort and size of a printing paper and correcting amount of a size of an image to be printed on at least one side of the printing paper; and
a blank form information obtaining section that obtains sort and size of a printing paper to be used for printing, and
wherein the image size correcting section corrects a size of an image to be printed on at least one side of first and second sides of a printing paper on the original image data or the printing data after conversion by the data conversion section, by a correcting amount according to the sort and size of the printing paper obtained by the blank form information obtaining section.

Further, in the image processing program storage medium according to the present invention as mentioned above, it is preferable that the image processing apparatus further comprises a printing mode obtaining section that obtains a discrimination between a single-sided print and a perfecting print, and
the image size correcting section corrects a size of an image to be printed on at least one side of first and second sides of a printing paper when the printing mode obtaining section designates the perfecting print.

This feature makes it possible for various types of printing papers, which are mutually different in sort and size, to create printing data in which sizes of images on the front and back of the respective printing paper are sufficiently coincident with one another.

### BRIEF DESCRIPTION OF THE DRAWINGS

Fig. 1 is a view of a system in which an embodiment of an image processing apparatus of the present invention is incorporated therein.
Fig. 2 is a hardware structural view of an information processing apparatus shown in Fig. 1.
Fig. 3 is a conceptual view of a CD-ROM storing an image processing program stored in an image processing program storage medium of the present invention.
Fig. 4 is a view showing a structure of an embodiment of an image processing apparatus of the present invention.
Fig. 5 is a block diagram useful for understanding a flow of data in an embodiment of an image processing apparatus of the present invention.
Fig. 6 is a view showing a pattern for correcting two sides of a printing paper.
Fig. 7 is a view showing a screen displayed on the image display unit shown in Fig. 2.

### DETAILED DESCRIPTION OF PREFERRED EMBODIMENTS

Embodiments of the present invention will be described with reference to the accompanying drawings.

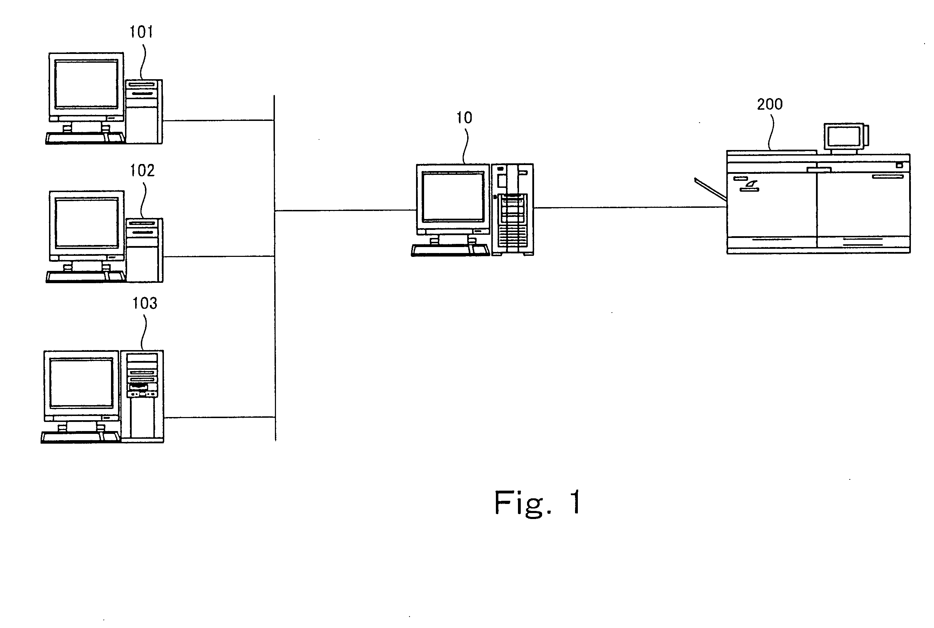

Fig. 1 is a view of a system in which an embodiment of an image processing apparatus of the present invention is incorporated therein.

As shown in Fig. 1, the system comprises editing workstations 101, 102 and 103, an information processing apparatus 10, and a printer 200.

In the editing workstations 101, 102 and 103, an editing software (a DTP application) is used to perform an editing work for determining a layout for a pattern representative of an image, a text, and a line drawing using a PDL (Page Description Language). And a result of the editing work is outputted to the information processing apparatus 10 in form of PS (PostScript) data and PDF (Portable Document Format) data.

The information processing apparatus 10 incorporates thereinto an image processing apparatus according to an embodiment of the present invention. The image processing apparatus incorporated into the information processing apparatus 10 converts the PS and the PDF data (those data are page description data representative of an image and correspond to an example of original image data referred to in the present invention) into raster image data for printing (an example of printing data referred to in the present invention). The image processing apparatus outputs the raster image data for printing to the printer 200.

As the printer 200, there is used a printer adopting an electrophotographic system and a sublimation heat transfer system. The printer 200 prints an image represented by the raster image data on two sides or one side of a designated printing paper.

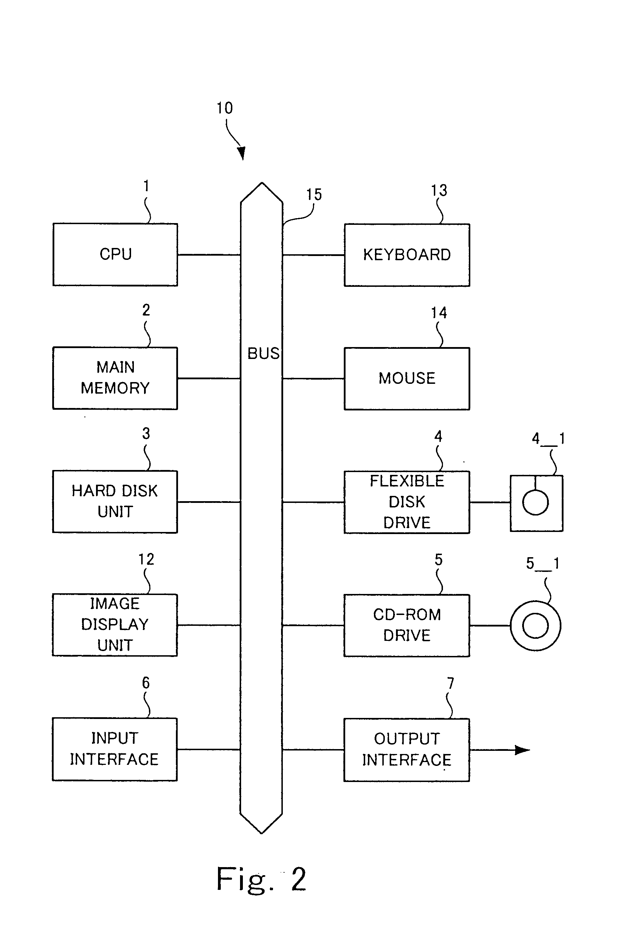

Fig. 2 is a hardware structural view of the information processing apparatus shown in Fig. 1.

The information processing apparatus 10 comprises: a CPU (central processing unit) 1 for executing various sorts of program; a main memory 2 in which a program stored in a hard disk unit 3 is read and is developed for execution by the CPU 1; the hard disk unit 3 storing various sorts of programs and data; a flexible disk drive 4 for accessing a flexible disk 4_1 mounted on the flexible disk drive 4; a CD-ROM drive 5 for accessing a CD-ROM 5_1 mounted on the CD-ROM drive 5; an input interface 6 connected to the editing workstations 101, 102 and 103 shown in Fig. 1 to receive PS/PDF data from the editing workstations 101, 102 and 103; and an output interface 7 connected to the printer 200 to transmit raster image data to the printer 200. Those elements are connected to one another via a bus 15, and also connected to an image display unit 12, a keyboard 13 and a mouse 14, which are also shown in Fig. 2.

The CD-ROM 5_1 stores therein an image processing program which causes the information processing apparatus 10 to operate as an embodiment of an image processing apparatus according to the present invention. The CD-ROM 5_1 is mounted on the CD-ROM drive 5 so that the image processing program stored in the CD-ROM 5_1 is uploaded onto the information processing apparatus 10 and is stored in the hard disk unit 3. When the image processing program stored in stored in the hard disk unit 3 is executed in the information processing apparatus 10, the information processing apparatus 10 serves as an embodiment of an image processing apparatus according to the present invention.

Here, there will be explained the image processing program to be executed in the information processing apparatus 10, which corresponds to the image processing program stored in an embodiment of the image processing program storage medium of the present invention.

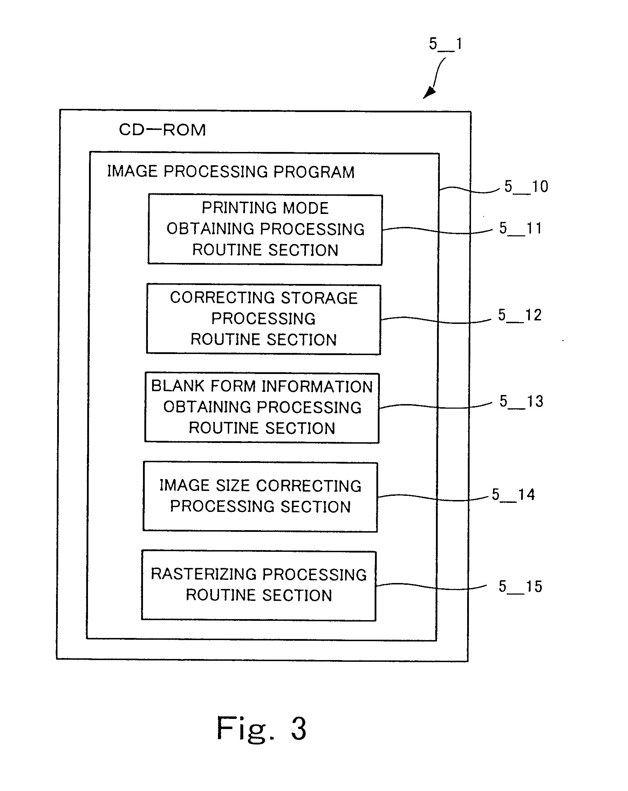

Fig. 3 is a conceptual view of a CD-ROM storing an image processing program stored in an image processing program storage medium of the present invention.

An image processing program 5_10 is stored in the CD-ROM 5_1 shown in Fig. 3. The image processing program 5_10 comprises a printing mode obtaining processing routine section 5_11, a correcting storage processing routine section 5_12, a blank form information obtaining processing routine section 5_13, an image size correcting processing routine section 5_14, and a rasterizing processing routine section 5_15. Details of the image processing program 5_10 will be described in conjunction with the effect of the respective elements of an embodiment of an image processing apparatus of the present invention.

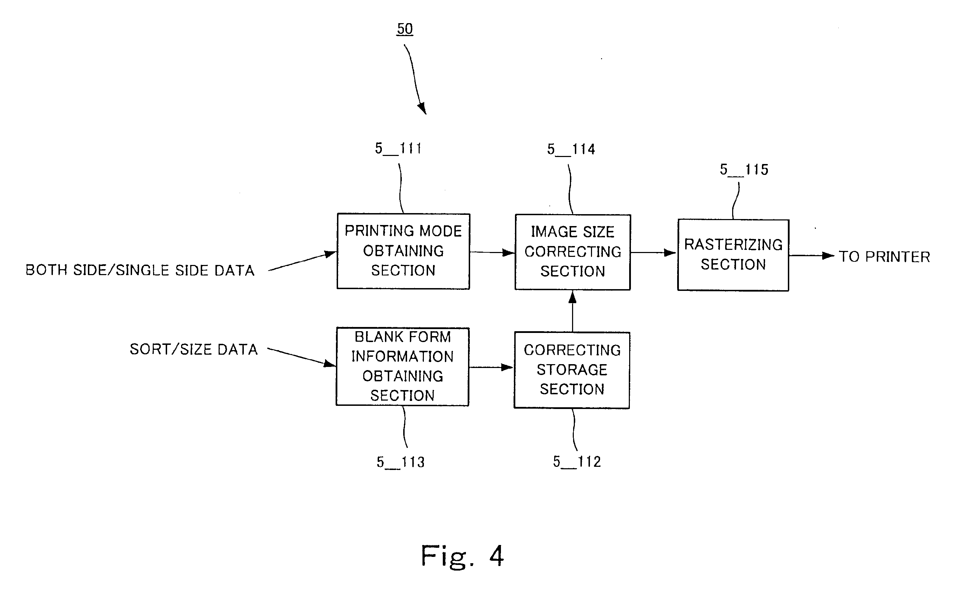

Fig. 4 is a view showing a structure of an embodiment of an image processing apparatus of the present invention.

An image processing apparatus 50 shown in Fig. 4 comprises a printing mode obtaining section 5_111, a correcting storage section 5_112, a blank form information obtaining section 5_113, an image size correcting section 5_114, and a rasterizing section 5_115 (corresponding to an example of the data conversion section referred to in the present invention).

The printing mode obtaining section 5_111 operate in accordance with the program of the printing mode obtaining processing routine section 5_11 shown in Fig. 3 to obtain a discrimination between a single-sided print and a perfecting print. Specifically, the information processing apparatus 10 shown in Fig. 2 is provided with a GUI (Graphical User Interface), in which on the screen of the image display unit 12 there are displayed, as a printing mode, a string of characters for perfecting print for both-sided printing and a string of characters for single-sided print for printing either one of the front (corresponding to the first side referred to in the present invention) and the back (corresponding to the second side referred to in the present invention). When either one of those strings of characters is selected through the use of the keyboard 13 and the mouse 14, it is possible to obtain data for either one of the both side and the single side. Incidentally, the same screen as the screen displayed by the GUI, of the image display unit 12 can be displayed also in the editing workstations 101, 102 and 103 shown in Fig. 1.

The correcting storage section 5_112 operates in accordance with the program of the correcting storage processing routine section 5_12 shown in Fig. 3 to store an association between sort and size of a printing paper and correcting amount of a size of an image to be printed on at least one side of the printing paper.

The blank form information obtaining section 5_113 operates in accordance with the program of the blank form information obtaining processing routine section 5_13 shown in Fig. 3 to obtain sort and size of a printing paper to be used for printing. Specifically, on the screen of the image display unit 12 there is displayed strings of characters for sort and size of a printing paper. When the strings of characters for desired sort and size are selected through the use of the keyboard 13 and the mouse 14, it is possible to obtain data for sort and size of printing paper.

The image size correcting section 5_114 operates in accordance with the program of the image size correcting processing routine section 5_14 shown in Fig. 3 to correct a size of an image to be printed on the front of the printing paper on the page description data (the PS/PDF data) representative of the image, in the event that the perfecting print is designated in the printing mode obtaining section 5_111. The image size correcting section 5_114 corrects the size of the image by the correcting amount according to the sort and size of the printing paper obtained in the blank form information obtaining section 5_113.

The rasterizing section 5_115 operates in accordance with the program of the rasterizing processing routine section 5_15 shown in Fig. 3 to convert the page description data representative of the image into raster image data for printing.

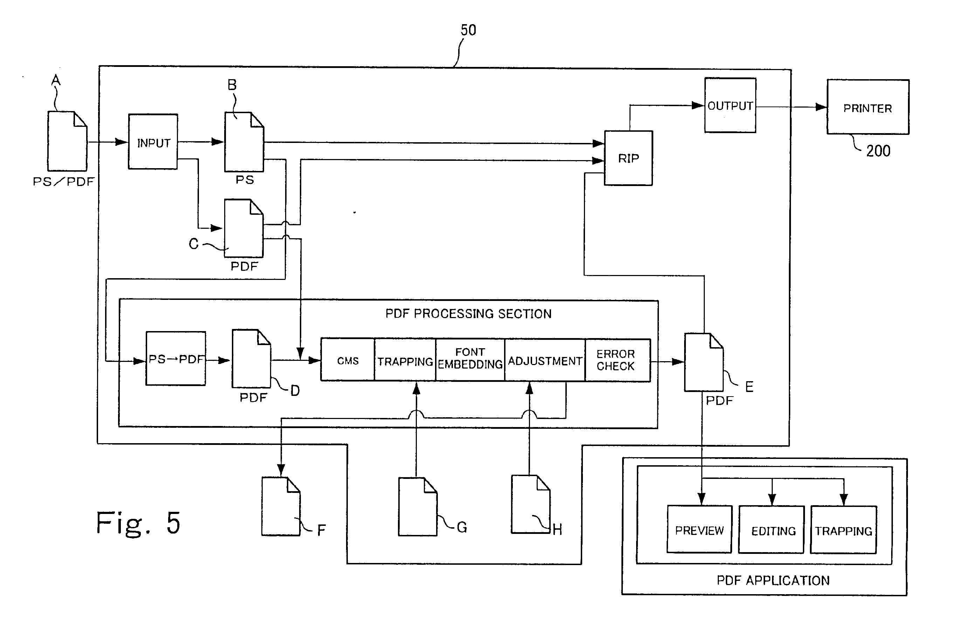

Fig. 5 is a block diagram useful for understanding a flow of data in the image processing apparatus 50 wherein the image processing program 5_10 is installed in the information processing apparatus 10 to cause the information processing apparatus 10 to operate as an embodiment of the image processing apparatus of the present invention.

The image processing apparatus 50 shown in Fig. 5 receives page description data (PS data and PDF data) constituting a file A from the editing workstations 101, 102 and 103 shown in Fig. 1. The PS data and the PDF data are saved (spooled) in form of a file B and a file C, respectively. Those files B and C are rasterized directly in a RIP (Raster Image Processor) constituting the rasterizing section 5_115 shown in Fig. 4, or the file D is converted into PDF data in a PDF processing section to create a file D. Data (PDF data) of the files C and D are subjected to a color conversion processing in accordance with an ICC profile G in a CMS (Color Management System), and then subjected to a trapping processing such as fattening processing and thinning processing for objects so that misregistration of colors on printing paper to be printed by the printer 200 is inconspicuous, and finally subjected to a font embedding processing in which font data is embedded in the PDF data.

Next, an adjustment is performed in accordance with an adjustment parameter H. Here, in the event that the printing mode obtaining section 5_111 shown in Fig. 4 obtains both side data, a size of an image to be printed on the front is corrected and adjusted on the PDF data by a correcting amount according to sort/size data for a blank form which is obtained in the blank form information obtaining section 5_113 and is stored in the correcting storage section 5_112 in form of the adjustment parameter H. Further, an error check is performed to obtain a finally processed PDF file E and to output it in form of a file F to the exterior. According to the present embodiment, in the manner as mentioned above, there is obtained the PDF file E subjected to the font embedding processing. Thus, when the PDF file E is used in an external apparatus, even if the external apparatus does not incorporate therein the font, the use of a PDF application installed in the external apparatus makes it possible to perform a preview (a display), an editing and a trapping designation. Further, the PDF file E is rasterized by the RIP and is outputted to the printer 200.

Next, there will be explained a way to know to what extent a size of an image on the front of a printing paper is to be corrected, in the event that the perfecting print is designated.

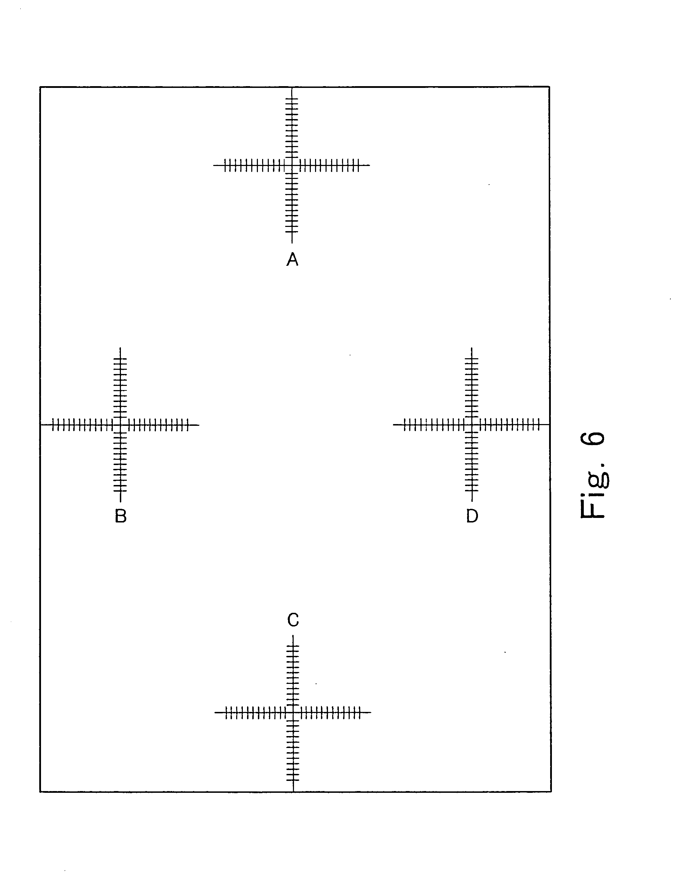

Fig. 6 is a view showing a pattern for correcting two sides of a printing paper.

First, four patterns A, B, C and D as shown in Fig. 6 are printed on the front of a printing paper. Those four patterns A, B, C and D are marked with degrees in a predetermined size in an X-direction and a Y-direction. Here, at the time when the front of a printing paper is printed, the printing paper may be deformed owing to a physical factor such as heat and pressure. In this state, the four patterns A, B, C and D are printed on the back of the printing paper too. As a result, the patterns A, B, C and D printed on the front and the patterns A, B, C and D printed on the back are different in size in the X-direction and the Y-direction, respectively. Here, for example, there are made holes by a pin or the like on fixed-points for the X-direction and the Y-direction of the patterns A, B, C and D printed on the front of the printing paper, and there is measured misregistration of the patterns A, B, C and D printed on the back of the printing paper from fixed-point positions. In this manner, the misregistration between the patterns A, B, C and D printed on the front and the patterns A, B, C and D printed on the back are measured, respectively.

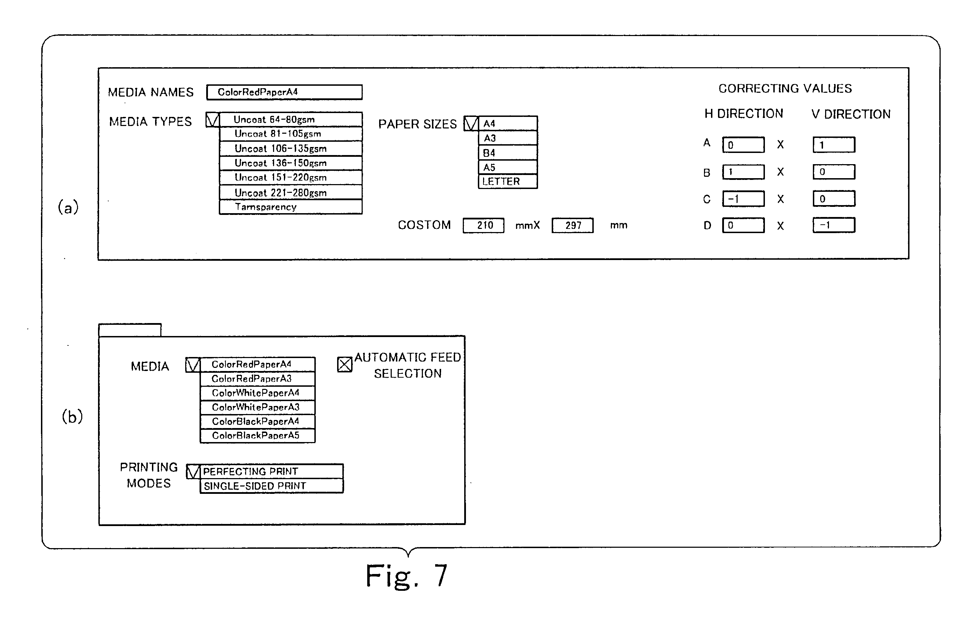

Fig. 7 is a view showing a screen displayed on the image display unit shown in Fig. 2.

Part (a) of Fig. 7 shows a screen for a media set up and a two-side correcting value set up. Part (b) of Fig. 7 shows a screen for a designation of a media set up and a designation of a printing mode.

The screen of the part (a) of Fig. 7 shows media (corresponding to the printing paper referred to in the present invention) names, media types, paper sizes and correcting values. On the screen, there are set up: as the media name Color Red Paper A4; as the media type Uncoat 64-80gsm; as the paper size A4; and as correcting values in a horizontal direction (the X direction) to the patterns A, B, C, D printed on the front as the correcting values and in a vertical direction (the Y direction) 0, 1, -1, 0, and 1, 0, 0, -1, respectively.

The screen of the part (b) of Fig. 7 shows media, printing modes and an automatic feed selection. On the screen, there are designated: as the media Color Red Paper A4; as the printing mode perfecting print; and as the automatic feed selection present. There is a possibility that a misregistration amount of images in the front and the back of a printing paper is varied in accordance with type and size of the printing paper. And thus a user designates the type and the size to print the above-mentioned patterns A, B, C and D on the front and the back, and measures and determines a misregistration amount beforehand. Thereafter, designation of the media name on the screen of the part (a) of Fig. 7 makes it possible for the user to identify the type and size of the printing paper. Thus the user knows a correcting value to be corrected and designates the correcting value. The designated correcting value is stored in the correcting storage section 5_112 as the adjustment parameter H. In the manner as mentioned above, when the perfecting print is designated, a size of an image to be printed on the front of a printing paper is corrected on page description data representative of the image, and the page description data adjusted in the size of the image is rasterized. Accordingly, in the perfecting print, it is possible to create data for printing in which sizes of images on the front and the back are sufficiently coincident with one another.

Incidentally, it is acceptable that designation of single-sided print/two-sided print, and types and sizes of a printing paper are entered from the editing workstations 101, 102 and 103, but not through the information processing apparatus 10.

Further, according to the present embodiments, in the event that the perfecting print is designated, there is raised an example in which a size of an image to be printed on the front of a printing paper is corrected on page description data representative of the image. However, the present invention is not restricted to this example. It is acceptable, in the event that the perfecting print is designated, that a size of an image to be printed on the back of a printing paper is corrected on page description data representative of the image. Alternatively, it is acceptable that sizes of images to be printed on the front and back of a printing paper are corrected on raster image data. Further, even if the single-sided print is designated, it is acceptable that a size of an image to be printed on the single-side of a printing paper is corrected on the page description data or the raster image data. According to the present invention, it is acceptable that a size of an image to be printed on at least one side of first and second sides of a printing paper is corrected on original image data or printing data so that sizes of images on both sides of the printing paper, wherein the same images are printed on both sides of the printing paper, are substantially the same.

As mentioned above, according to the present invention, it is possible to create printing data in which sizes of images on the front and the back of a perfecting print are sufficiently coincident with one another.

While the present invention has been described with reference to the particular illustrative embodiments, it is not to be restricted by those embodiments but only by the appended claims. It is to be appreciated that those skilled in the art can change or modify the embodiments without departing from the scope and sprit of the present invention.

## Claims

1. An image processing apparatus comprising:
a data conversion section that converts original image data into printing data; and
an image size correcting section that corrects a size of an image to be printed on at least one side of first and second sides of a printing paper on the original image data before conversion by the data conversion section or the printing data after conversion by the data conversion section so that sizes of images on both sides of the printing paper, wherein same images are printed on both sides of the printing paper, are substantially the same.

2. An image processing apparatus according to claim 1, wherein the image processing apparatus further comprises:
a correcting storage section that stores an association between sort and size of a printing paper and correcting amount of a size of an image to be printed on at least one side of the printing paper; and
a blank form information obtaining section that obtains sort and size of a printing paper to be used for printing, and
wherein the image size correcting section corrects a size of an image to be printed on at least one side of first and second sides of a printing paper on the original image data or the printing data after conversion by the data conversion section, by a correcting amount according to the sort and size of the printing paper obtained by the blank form information obtaining section.

3. An image processing apparatus according to claim 1, wherein the image processing apparatus further comprises a printing mode obtaining section that obtains a discrimination between a single-sided print and a perfecting print, and
the image size correcting section corrects a size of an image to be printed on at least one side of first and second sides of a printing paper when the printing mode obtaining section designates the perfecting print.

4. An image processing program storage medium storing an image processing program which causes an information processing apparatus to operate as an image processing apparatus, when the image processing program is incorporated into the information processing apparatus and is executed, the image processing apparatus comprising:
a data conversion section that converts original image data into printing data; and
an image size correcting section that corrects a size of an image to be printed on at least one side of first and second sides of a printing paper on the original image data before conversion by the data conversion section or the printing data after conversion by the data conversion section so that sizes of images on both sides of the printing paper, wherein same images are printed on both sides of the printing paper, are substantially the same.

5. An image processing program storage medium according to claim 4, wherein the image processing apparatus further comprises:
a correcting storage section that stores an association between sort and size of a printing paper and correcting amount of a size of an image to be printed on at least one side of the printing paper; and
a blank form information obtaining section that obtains sort and size of a printing paper to be used for printing, and
wherein the image size correcting section corrects a size of an image to be printed on at least one side of first and second sides of a printing paper on the original image data or the printing data after conversion by the data conversion section, by a correcting amount according to the sort and size of the printing paper obtained by the blank form information obtaining section.

6. An image processing program storage medium according to claim 4, wherein the image processing apparatus further comprises a printing mode obtaining section that obtains a discrimination between a single-sided print and a perfecting print, and
the image size correcting section corrects a size of an image to be printed on at least one side of first and second sides of a printing paper when the printing mode obtaining section designates the perfecting print.
